# EUROPÄISCHE PATENTANMELDUNG

(11) **EP 0 960 634 A2**
(43) Veröffentlichungstag der Anmeldung: **01.12.1999**
(21) Anmeldenummer: 99107142.4
(22) Anmeldetag: 13.04.1999
(51) Int. Cl.: A62C 37/14

(54) **Temperaturgesteuerte Sicherheitsvorrichtung für Druckbehälter**

(30) Priorität: 25.05.1998 DE 29809230 U
(71) Anmelder: Job Lizenz GmbH & Co. KG, 22926 Ahrensburg (DE)
(72) Erfinder: Job, Eduard, J.,Dipl.-Ing., 22926 Ahrensburg (DE); Schnoor, Christian, 23562 Lübeck (DE)
(74) Vertreter: von Raffay, Vincenz, Dipl.-Ing.

(57) **Zusammenfassung**

Die temperaturgesteuerte Sicherheitsvorrichtung für Druckbehälter weist eine Drucköffnung (8) auf, die durch eine Berstscheibe (3) verschlossen ist. Die Berstscheibe (3) ist durch ein thermisches Auslöseelement abgestützt. Um die Temperatur, bei der der Sicherheitsfall ausgelöst wird, sehr genau festzulegen, und um sicherzustellen, daß der Druckbehälter nur einmal gefüllt werden kann, ist das thermische Auslöseelement vorzugsweise eine Glasampulle (6), die bei Überschreiten eines bestimmten Innendruckes, ausgeübt durch die thermische Expansion der enthaltenen Flüssigkeit, zerstört wird.

## Beschreibung

Die Erfindung betrifft eine temperaturgesteuerte Sicherheitsvorrichtung nach dem Oberbegriff des Anspruches.

Eine derartige Sicherheitsvorrichtung ist aus der deutschen Auslegeschrift 2 2229 620 bekannt. Das thermische Auslöseelement dieser bekannten Vorrichtung wird durch eine Schmelzlotverbindung zwischen zwei entsprechenden Bauteilen gebildet, von denen das eine ortsfest ist, d.h. praktisch das Gehäuse bildet, und das andere beweglich ist. Zwischen diesem beweglichen Teil und der Bertscheibe ist ein Stützkörper, dort mit Kraftübertragungselemenet bezeichnet, angeordnet, der senkrecht zu der Berstscheibe begrenzt verschiebbar ist. Dieser Stützkörper überträgt die in der Druckbohrung anstehende Druckkraft in dem Druckbehälter vornehmlich für Hochdruckgase auf das bewegliche Element und damit auf die Schmelzlotverbindung. Zwischen dem beweglichen Bauteil und der Stirnfläche des Stützkörpers ist bei dieser bekannten Vorrichtung im drucklosen Zustand ein Zwischenraum vorgesehen, dessen Größe etwa der elastischen Verformung der Berstscheibe, dort als Membran bezeichnet, durch den Druck in dem Druckbehälter entspricht. Wenn die Schmelzlotverbindung bei der bekannten Vorrichtung bei drucklosem Gasbehälter auf Schmelztemperatur erwärmt wird und anschließend wieder abkühlt, so wird das Lot wieder fest und es ist von außen nicht erkennbar, daß zwischenzeitlich ein Sicherheitsfall eingetreten war. Die wieder festgewordene Lötverbindung entspricht nicht mehr den Sicherheitsanforderungen. Es kann zu unerwünschten Auslösungen bei erneutem Füllen des Druckbehälters kommen. In anderen Worten, es ist nicht erkennbar, daß die Sicherheitsvorrichtung nicht mehr den Sicherheitsanforderungen entspricht.

Der Erfindung liegt die Aufgabe zugrunde, eine temperaturgesteuerte Sicherheitsvorrichtung der eingangs genannten Art zu schaffen, bei der das Auslösekriterium, d.h. die Temperatur, bei der die Sicherheitsvorrichtung ausgelöst wird, sehr genau festliegt und bei der es nicht möglich ist, daß der Druckbehälter noch einmal gefüllt werden kann, wenn der Sicherheitsfall eingetreten war, d.h. die Sicherheitsvorrichtung der vorbestimmten zu hohen Temperatur ausgesetzt war. Dieser Tatbestand soll auch optisch gut erkennbar sein.

Diese Aufgabe wird grundsätzlich durch das Kennzeichen des Anspruches 1 gelöst.

Erfindungsgemäß wird nicht eine schlecht kontrollierbare Schmelzlotverbindung eingesetzt, sondern als thermisches Auslöseelement, vorzugsweise eine Glasampulle, die mit einer Flüssigkeit gefüllt ist, die bei einer bestimmten Temperatur so weit expandiert, daß die Glasampulle zerstört und die Sicherheitseinrichtung eindeutig ausgelöst wird. Eine Wiederbefüllung des Druckbehälters ist dann nicht mehr möglich. Wenn der Druckbehälter unter Druck steht, wird die Berstscheibe nach Zerstörung der Glasampulle ebenfalls zerstört und der Gasbehälter entleert sich. Wenn der Druckbehälter nicht unter Druck steht, bleibt die Berstscheibe erhalten, die Glasampulle jedoch wird zerstört. Dieses ist von außen klar erkennbar.

Bei der Ausführung nach Anspruch 1 ist die Glasampulle mit einem planen Boden versehen, an dem die Berstscheibe direkt anliegt.

Wählt man eine Materialpaarung von Glasampulle und Gehäuse mit fast gleichen Ausdehnungskoeffizienten, ist eine direkte Abstützung denkbar.

In der Praxis sind die unterschiedlichen Wärmeausdehnungskoeffizienten zwischen Glas und Metall, sowie Fertigungstoleranzen, zu kompensieren.

Die Sicherheitsvorrichtung nach der Erfindung kann in der unterschiedlichsten Weise ausgestaltet sein. In den Ansprüchen 2, 3, 4 und 5 sind unterschiedliche Ausgestaltungen unter Schutz gestellt, die eine sichere und gegenüber den Wärmeausdehnungskoeffizienten kompensierte Einspannung des thermischen Auslöseelementes ermöglichen.

Bei der Ausführungsform nach Anspruch 3 ist eine Vertiefung oder Eindrehung vorhanden, die eine beschränkte Bewegung der Berstscheibe ermöglicht, wenn sich der Stützkörper in diese Richtung bewegt.

Bei der Ausgestaltung nach Anspruch 4 ist ein federnder Teil des Flansches vorgesehen, der den Stützkörper hält und eine beschränkte Bewegung des Stützkörpers erlaubt, um für die gewünschte Kompensation zu sorgen.

Bei der Ausgestaltung nach Anspruch 5 ist an dem anderen Ende, d.h. dem Stützkörper gegenüberliegend, eine federnde Lagerung vorgesehen.

Auch bei den Ausführungsformen nach den Ansprüchen 4 und 5 ist es möglich, zusätzlich eine Vertiefung auf der dem Stützkörper abgelegenen Seite der Berstscheibe vorzusehen, um hier zusätzlich eine kompensierende Bewegung zuzulassen.

Im Rahmen der Erfindung sind die unterschiedlichsten Ausgestaltungen denkbar, um ein thermisches Auslöseelement in Form einer Glasampulle einzusetzen und so für einen sehr exakten Auslösepunkt zu sorgen, d.h. die Temperatur, bei der ein Sicherheitsfall ausgelöst werden kann, sehr genau im voraus festzulegen.

In den Ansprüchen 6 bis 10 sind vorteilhafte Ausgestaltungen unter Schutz gestellt.

Wenn die Vorrichtung so vorgesetzt ist, wie in Anspruch 11 angegeben, dann ist es möglich, mit Hilfe der Einstellschraube die durch das Vorsetzen bedingte Verschiebung der Glasampulle wieder auszugleichen d.h. die Einstellschraube wird so weit hineingedreht, daß die der Berstscheibe zugekehrte Stirnfläche des Stützkörpers plan mit der entsprechenden angrenzenden Fläche des Gehäuses ist, d.h. ohne Kraft beansprucht an der Berstscheibe anliegt.

Im folgenden wir die Erfindung unter Hinweis auf die Zeichnung anhand verschiedener Ausführungsbeispieles näher erläutert.

Es zeigt:
- Fig. 1: einen Schnitt durch die erste Ausführungsform der Sicherheitseinrichtung nach der Erfindung im geschlossenen Zustand, d.h. vor Auslösung des Sicherheitsfalles ohne Ausgleichsmöglichkeiten für Ausdehnungskoeffizienten.
- Fig. 2:: einen Schnitt durch eine zweite Ausführungsform einer Sicherheitsvorrichtung nach der Erfindung im geschlossenen Zustand, d.h. vor Auslösung des Sicherheitsfalls;
- Fig. 3:: einen der Fig. 1 entsprechenden Schnitt, jedoch nach Eintreten des Sicherheitsfalls, d.h. nach Zerstörung der Glasampulle;
- Fig. 4:: einen Schnitt durch eine zweite Ausführungsform einer Sicherheitsvorrichtung nach der Erfindung vor Auslösen des Sicherheitsfalls; und
- Fig. 5:: einen Schnitt durch eine dritte Ausführungsform einer Sicherheitsvorrichtung nach der Erfindung vor dem Auslösen des Sicherheitsfalls.

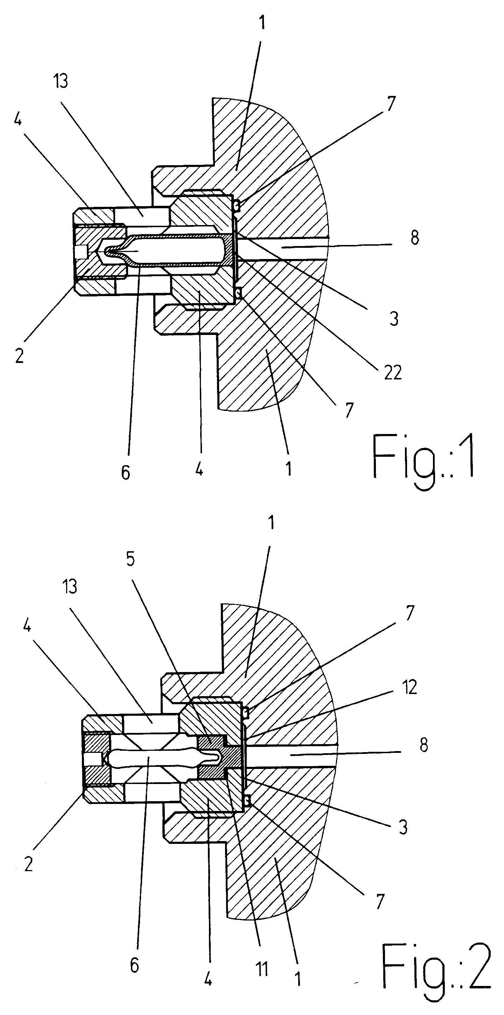

Die in den Fig. 1, 2 und 3 dargestellte temperaturgesteuerte Sicherheitsvorrichtung wird in einen Druckbehälter eingesetzt, und zwar in einen Flansch 1. Die unter Druck des Druckbehälters stehende Druckbohrung ist mit 8 bezeichnet. An dieser Bohrung steht bei gefülltem Behälter der Druck an.

Die Druckbohrung 8 ist durch eine Berstscheibe 3, die man auch als Membran bezeichnen kann, verschlossen. Die Berstscheibe 3 liegt an einer O-Ring-Dichtung 7 auf der Seite des Hochdruckflansches 1 an. In eine entsprechende Gewindebohrung des Flansches 1 ist ein Gehäuse 4 eingeschraubt. Bei Fig. 1 liegt die Berstscheibe 3 direkt an dem plan gefertigten Boden 22 des Glasfasses, der sehr präzise in das Gehäuse 4 eingepaßt wird.

Bei Fig. 2 liegt an der Berstscheibe 3 ein Stützkörper 5, der als Stufenkolben ausgebildet ist. Der Kolbenabschnitt kleineren Durchmessers liegt mit seiner Stirnfläche an der Berstscheibe 3 an. Zwischen der durch den Abschnitt größeren Durchmessers gebildeten Stufe und der angrenzenden Fläche des Gehäuses 4 ist ein Spiel 11 vorhanden, so daß sich der Stützkörper 5 begrenzt in axialer Richtung verschieben läßt. Der Stützkörper stützt die Glasampulle 6 ab. Das andere Ende der Glasampulle 6 wird durch eine Einstellschraube 2 gehalten, die in das untere Ende des Gehäuses 4 eingeschraubt ist. In dem Gehäuse 4 ist auch eine Ausblasbohrung 13 vorgesehen.

Auf der dem Stützkörper 5 abgelegenen Seite der Berstscheibe 3 ist in dem Hochdruckflansch 1 eine Eindrehung 12 vorgesehene, die ein geringes Spiel er Berstscheibe zuläßt.

Wenn eine bestimmte Temperatur in der Umgebung des Druckbehälters auftritt, auf die die Glasampulle 6 eingestellt ist, dann wird diese durch die Expansion der Flüssigkeit zerstört. Die Berstscheibe 3, die unter dem Druck in dem Druckbehälter steht, drückt den Stützköper 5 aus seiner Führungsbohrung heraus in den Bereich der Ausblasbohrung 13. Das Gas aus dem Druckbehälter kann entweichen.

Wird der Druckbehälter im nicht gefüllten Zustand unbemerkt einer höheren Temperatur ausgesetzt, die den Druckbehälter schädigen könnte, wird die Glasampulle zerstört, was gut sichtbar ist. Wird der Druckbehälter nun danach gefüllt, reißt die Berstscheibe bei einem unkritischen, niedrigen Druck auf und der Druckbehälter kann nicht über einen kritischen Druck gefüllt werden, und somit nicht zum gefährlichen Bersten (z.B. mit Gas) gebracht werden. Wird beim Füllen das Abströmen festgestellt, ist der Druckbehälter von einem Fachmann zu untersuchen, ob dieser geschädigt wurde.

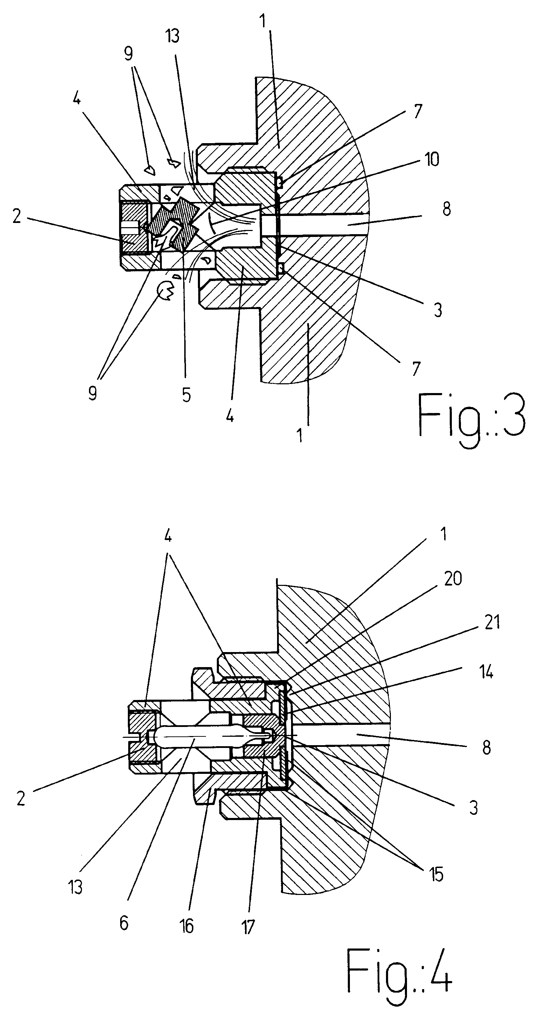

In Fig. 3 ist die Sicherheitsvorrichtung nach Fig. 2 dargestellt, nachdem die Glasampulle zerstört wurde, und das Gas aus der Hochdruckbohrung 8 entweicht.

Wenn die Sicherheitsvorrichtung nach Fig. 2 zusammengebaut wird, d.h. wenn der Stützkörper 5 mit der Glasampulle 6 und der Einstellschraube 2 in das Gehäuse 4 eingesetzt ist, wird auf die Glasampulle zum Vorsetzen eine Kraft von ca. 800 N ausgeübt. Dieses entspricht einem Prüfdruck von ca. 425 bar. Diese Kraft kann die Glasampulle ohne Probleme aufnehmen. Jedoch verformt sich der Stützkörper 5 und die Einstellschraube 2 dort, wo diese die Glasampulle unmittelbar aufnehmen, d.h. das Gesamtmaß von Planfläche des Stützkörpers 5 bis zum Fixpunkt der Einstellschraube verringert sich um bis zu 0,3 mm. Dieses würde zu einem Reißen der Berstscheibe 3, die nur ca. 0,02 mm dick ist, führen, wenn dieses Setzen nicht wieder kompensierte würde. Aus diesem Grunde werden Stützkörper 5 und Einstellschraube 2 vorgesetzt, d.h. die relevanten Teile werden mit der maximal auftretenden Kraft über ca. eine Minute belastet. Dann ist durch das Setzen eine entsprechende Anpassung erfolgt. Jetzt wird die Einstellschraube 2 so weit in das Gehäuse 4 hineingedreht, daß die Stützfläche des Stützkörpers 5 plan zur Stützfläche des Gehäuses 4 liegt, und somit die Berstscheibe 3 auf einer glatten Fläche aufliegt.

Bei Temperaturschwankungen in bestimmten Bereichen ist eine Bewegung des Stützkörpers, bedingt durch unterschiedliche Ausdehnungskoeffizienten, möglich, da die Eindrehung 12 eine gewisse Bewegung der Berstscheibe zuläßt.

Die Ausführungsform nach Fig. 4 unterscheidet sich dadurch von derjenigen nach den Fig. 1 und 2, daß das Gehäuse 4 in dem Bereich, der an die Druckbohrung 8 des Druckgasbehälters angrenzt, einen elastischen Bereich 14 aufweist. Auf der der Berstscheibe 3 abgelegenen Seite ist in dem Gehäuse 4 hinter dem elastischen Flansch eine Eindrehung vorgesehen, so daß der Flansch in dieser Richtung bewegbar ist, um Verschiebungen der anderen Bauteile, insbesondere des Stützkörpers 17, bedingt durch unterschiedliche Ausdehnungskoeffiezienten der entsprechenden Teile, die die Glasampulle halten, zu kompensieren. Der Stützkörper 17 ist in dem Gehäuse 4 in Achsrichtung der Glasampulle 6 bewegbar, und zwar so, wie es die Federkraft "des elastischen Bereiches 14" zuläßt.

Der elastische Bereich 14 kann als einzelnes Federelement in das Gehäuse 4 eingesetzt sein oder durch Einstechen einer umlaufenden Ringnut erzeugt werden.

Die unterschiedlichen Ausdehnungskoeffizienten werden somit durch geringe Verformung des elastischen Bereiches 14 kompensiert. Für die Bewegung des elastischen Bereiches 14 befindet sich auf der Seite des Gehäuses 1 eine Vertiefung 12.

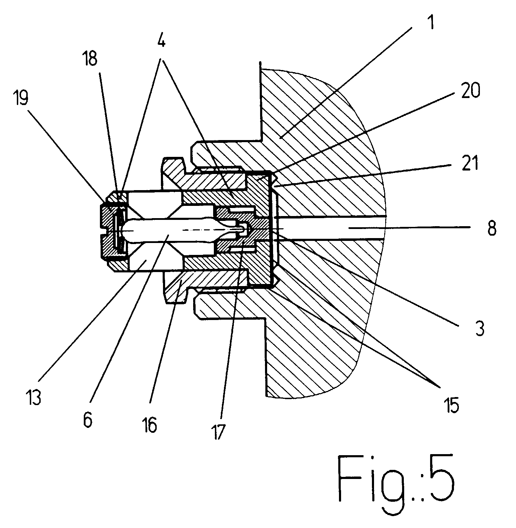

Bei der Ausführungsform nach Fig. 4 befindet sich auf der Hochdruckseite eine Vertiefung 12, die durch einen vorstehenden Ring 21 gebildet wird. Diese entspricht grundsätzlich der Eindrehung 12 bei der Ausführungsform nach den Fig. 1,2 und 3. Durch Anziehen der Mutter 16, die das Gehäuse 4 bei dieser Ausführungsform nach Fig. 4 und 5 hält, wird eine hohe Flächenpressung erreicht, so daß ein Dichtring, wie bei der Ausführungsform nach den Fig. 1 und 2, nicht mehr erforderlich ist.

Die Ausführungsform nach Fig. 5 unterscheidet sich dadurch von derjenigen nach Fig. 4, daß der Stützkörper 23 nicht mehr in Richtung auf die Hochdruckbohrung 8 in Achsrichtung der Glasampulle 6 verschiebbar ist. Der als Stufenlkolben ausgebildete Stützkörper 23 liegt an dem entsprechenden Flansch des Gehäuses 4 an, so daß in dieser Richtung eine Bewegung des Stützkörpers nicht möglich ist. In die andere Richtung, d.h. im Sicherheitsfall, ist der Stützkörper 23 selbstverständlich bewegbar, so daß er aus dem Gehäuse herausfällt, damit das Gas entweichen kann.

Die eine Kompensation zulassende Abstützung der Glasampulle 6 erfolgt bei dieser Ausführungsform nach Fig. 5 an dem anderen Ende des Gehäuses 4. Die Einstellschraube 19 dient der Lagerung einer federnden Scheibe 18. Dies wird bei der Montage entsprechend vorgespannt, so daß sie eine Bewegung der Glasampulle zur Kompensation der durch die unterschiedlichen Ausdehnungskoeffizienten bedingten Ausdehnungen der beteiligten Bauteile zulassen. Die Kraft der Federelemente 18 ist immer etwas stärker als die druckseitig auf die Berstscheibe 3 ausgeübte Kraft. Die Federkraft wird durch entsprechendes Anziehen der Einstellschraube 19 festgelegt.

Es ist vorteilhaft, wenn das Gehäuse 4 und der Stützkörper 23 erst im vorgespannten, montierten Zustand zu einer Planfläche angeglichen werden, so daß die Berstscheibe 3 plan aufliegt. Die Berstscheibe 3 wird in Fig. 4 und 5 mit einer Kappe 15 auf dem Gehäuse 4 gehalten. Damit die Berstscheibe 3 beim Anziehen der Mutter 16 nicht zerknickt, wird zwischen Kappe 15 und Flansch 20 des Gehäuses ein umlaufender Formschluß durch einen Vielzahn, Rändelung oder Mehrkant erzeugt.

Bei der Sicherheitsvorrichtung nach der Erfindung ist es grundsätzlich so, daß die Glasampulle sicher bei der gewünschten Temperatur zerstört wird. Ist der Behälter beim Eintreten des Sicherheitsfalls leer, so kann er nur auf einen unkritischen Grund gefüllt werden, weil dann die Berstsicherung aufreißt. Diese Funktion ist lageunabhängig. Ist der Druckgasbehälter gefüllt, so wird die Berstsicherung sofort bei Zerstörung der Glasampulle aufgerissen und das unter Druck stehende Gas entweicht.

## Patentansprüche

1. Temperaturgesteuerte Sicherheitsvorrichtung für Druckbehälter, dessen Drucköffnung (8) durch eine Berstscheibe (3) verschlossen ist, die durch ein thermisches Auslöseelement abgestützt wird, dadurch gekennzeichnet, daß das thermische Auslöseelement vorzugsweise eine Glasampulle (6) ist, die bei Überschreiten eines bestimmten Innendruckes, ausgeübt durch die thermische Expansion der enthaltenen Flüssigkeit, zerstört wird.

2. Sicherheitsvorrichtung nach Anspruch 1, dadurch gekennzeichnet, daß das thermische Auslöseelement (6) zwischen einem Stützkörper (5, 17, 23) und dem Gehäuse (4) derart abgestützt ist, daß eine beschränkte Bewegung in seine Achsrichtung zum Ausgleich der unterschiedlichen Wärmeausdehnungskoeffizienten möglich ist.

3. Sicherheitsvorrichtung nach Anspruch 2, dadurch gekennzeichnet, daß der Stützkörper (5) in Achsrichtung des thermischen Auslöseelmentes (6) begrenzt verschiebbar ist, und
daß angrenzend an die Berstscheibe (3) auf der dem Spiel freigehaltenen Stützkörper(5) abgelegenen Seite eine eine beschränkte Bewegung der Berstscheibe zulassende vertiefung oder Eindrehung (12), die einen elastischen Flansch (14) bildet, vorgesehen ist.

4. Sicherheitsvorrichtung nach Anspruch 2, dadurch gekennzeichnet, daß der Stützkörper (17) in Achsrichtung des thermischen Auslöseelementes (6) begrenzt verschiebbar ist, und
daß das Gehäuse (4) einen elastischen Flansch (14) aufweist, an dem sich der Stützkörper (17) abstützt.

5. Sicherheitsvorrichtung nach Anspruch 2, dadurch gekennzeichnet, daß das thermische Auslöseelement (6) an dem dem Stützkörper (23) abgelegenen Ende federnd (bei 18) gelagert ist.

6. Sicherheitsvorrichtung nach einem oder mehreren der vorstehenden Ansprüche, dadurch gekennzeichnet, daß der Stützkörper (5, 17, 23) als Stufenkolben ausgebildet ist, dessen Kolbenabschnitt kleineren Durchmessers an der Berstscheibe (3) anliegt.

7. Sicherheitsvorrichtung nach einem oder mehreren der vorstehenden Ansprüche, dadurch gekennzeichnet, daß die Glasampulle (6) zwischen dem Stützkörper (5, 17, 23) und einer Einstellschraube (2, 19) eingespannt ist, die in das Gehäuse (4) eingeschraubt ist.

8. Sicherheitsvorrichtung nach Anspruch 4, dadurch gekennzeichnet, daß der elastische Flansch (14) zwischen dem Stützkörper (17) und der Berstscheibe (3) vorgesehen ist.

9. Sicherheitsvorrichtung nach Anspruch 5, dadurch gekennzeichnet, daß die federnde Lagerung durch ein oder mehrere Federelemente (18) gebildet ist, die zwischen einer in der abgelegene Ende des Gehäuses (4) eingeschraubten Einstellschraube (19) und einem das Ende des thermischen Auslöseelementes (6) aufnehmenden Adapter (20) angeordnet sind.

10. Sicherheitsvorrichtung nach einem oder mehreren der vorstehenden Ansprüche, dadurch gekennzeichnet, daß auf der dem Stützkörper (5, 17, 23) abgelegenen Seite der Berstscheibe (3) eine Schutzkappe (15) mit einer Bohrung vorgesehen ist, die mit der Berstbohrung in dem Gehäuse (4) fluchtet und vorzugsweise etwas größer als diese ist.

11. Sicherheitsvorrichtung nach einem oder mehreren der vorstehenden Ansprüche, dadurch gekennzeichnet, daß der Stützkörper (5, 17, 23) und die anderen das thermische Auslöseelement lagernden Bauteile bei eingespannter Glasampulle (6) vorgesetzt, d.h. mit der maximal auftretenden Kraft vorbelastet werden.

12. Sicherheitsvorrichtung nach Anspruch 10, dadurch gekennzeichnet, daß die Schutzkappe (15) durch einen Formschluß gegen Verdrehen auf dem Flansch (20) des Gehäuses (4) durch Vielzahn, Rändelung oder Mehrkant gesichert ist.
